# EUROPÄISCHE PATENTSCHRIFT

(11) **EP 1 556 272 B1**
(45) Veröffentlichungstag und Bekanntmachung des Hinweises auf die Patenterteilung: **05.11.2008**
(21) Anmeldenummer: 03704681.0
(22) Anmeldetag: 22.02.2003
(51) Int. Cl.: B62D 25/06

(54) **DACHMODUL FUR EINE KFZ-KAROSSERIE**
ROOF MODULE FOR A MOTOR VEHICLE BODY
MODULE DE TOIT POUR CARROSSERIE D'AUTOMOBILE

(30) Priorität: 31.10.2002 DE 10251175
(43) Veröffentlichungstag der Anmeldung: 27.07.2005
(73) Patentinhaber: ThyssenKrupp Drauz Nothelfer GmbH, 74076 Heilbronn (DE)
(72) Erfinder: LÖSCH, Alfred, 66636 Tholey Hasborn (DE)
(74) Vertreter: Dahlkamp, Heinrich-Leo
(86) Internationale Anmeldenummer: PCT/EP2003/001818
(87) Internationale Veröffentlichungsnummer: WO 2004/039655

(56) Entgegenhaltungen:
- DE-A- 19 853 820
- US-A- 4 767 154

## Beschreibung

Die Erfindung betrifft ein Dachmodul für eine Kfz-Karosserie mit einem Verstärkungsrahmen und einer daran befestigten Dachhaut, wobei der Verstärkungsrahmen mit Schraub- und Klebeverbindungen an der Kfz-Karosserie befestigbar ist.

Dachmodule für Kfz-Karosserien sind in verschiedenen Ausführungen bekannt. Eine bekannte Ausführung (DE 198 53 820 A1) wird als vorgefertigtes Bauteil, an dem diverse Zubehörteile vormontiert sind, durch die Frontscheibenöffnung in die Karosserie eingeführt und von innen gegen die Dachöffnung gesetzt und dort befestigt. Anschließend erfolgt der Innenausbau der Karosserie, wobei gegebenenfalls bereits eingesetzte Seitentüren der Karosserie vorübergehend ausgehängt werden müssen.

Bei einer anderen Ausführung (DE 100 48 130 A1) weist das Dachmodul faltbare Randstreifen auf, die umgefaltet werden, damit das Dachmodul durch eine Dachöffnung in die Karosserie eingeführt werden kann. Danach werden die Randstreifen wieder entfaltet und das Dachmodul wird von innen gegen die Karosserie gesetzt und dort befestigt. Das alles ist aufwendig.

Aufgabe der Erfindung ist es, ein mit allen Zubehörteilen vorgefertigtes und lackiertes Dachmodul anzugeben, das bei der Endmontage auf die Kfz-Karosserie aufsetzbar ist.

Diese Aufgabe wird mit einem Dachmodul der eingangs beschriebenen Gattung dadurch gelöst, dass der Verstärkungsrahmen oder die Dachhaut randseitig einen zu einem U-Profil geformten Falzflansch aufweist, dass ein Randstreifen der Dachhaut oder des Verstärkungsrahmens in das U-Profil eingreift und dort mit dem Verstärkungsrahmen oder der Dachhaut verklebt ist und dass das Dachmodul in einer vertikalen Projektion größer ist als eine Dachöffnung in der Kfz-Karosserie. Die Dachhaut und der Verstärkungsrahmen können aus vorbehandelten und vorlackierten Blechen (Coil Coating) bestehen, sodass der Lieferant keine Lackiereeinrichtungen benötigt. Ferner kann das Dachmodul sowohl innen wie auch außen mit allen gewünschten Zubehörteilen versehen sein. Das Dachmodul wird nicht im Rohbau, also vor dem Lackieren der Karosserie, sondern erst in der Endmontage auf eine entsprechend modifizierte Karosserie aufgesetzt und daran in üblicher Weise mit Schraub- und Klebeverbindungen befestigt. Dadurch wird die Montage der Innenausstattung der Karosserie und auch der Instrumententafel durch die relativ große Dachöffnung erleichtert und, es kann auf den üblichen zwischenzeitlichen Ausbau der Seitentüren gegebenenfalls verzichtet werden.

Es empfiehlt sich, eine außenliegende Fuge zwischen dem Falzflansch und der Dachhaut zu versiegeln.

Zusätzliche Abdeck- und Verkleidungselemente sind nicht erforderlich, wenn wie vorgeschlagen vorgegangen wird.

Das U-Profil kann im Bereich einer Frontscheibe außenseitig eine Auflage für die Frontscheibe aufweisen. In diesem Zusammenhang kann die Dachhaut im Bereich der Frontscheibe mit einer Stufe versehen sein, deren Höhe etwa der Dicke der Frontscheibe entspricht.

Ferner kann das U-Profil im Türbereich eine Auflage für die Seitenfenstern und/oder eine mit den Seitenfenstern zusammenwirkende Scheibendichtung aufweisen. In diesem Zusammenhang kann die Dachhaut im Türbereich vorzugsweise eine Stufe aufweisen, deren Höhe etwa der Dicke des Seitenfensters und/oder der Scheibendichtung entspricht.

Im Folgenden werden in der Zeichnung dargestellte Ausführungsbeispiele der Erfindung erläutert; es zeigen:
- Fig. 1: schematisch eine Dachhaut und einen noch nicht damit verbundenen Verstärkungsrahmen,
- Fig. 2: einen Vertikalschnitt im Bereich einer Frontscheibe eines mit der Kfz- Karosserie verbundenen Dachmoduls,
- Fig. 3: ein vergrößertes Detail des Gegenstandes nach Fig. 2,
- Fig. 4: einen entsprechenden Vertikalschnitt im Türbereich,
- Fig. 5: einen entsprechenden Vertikalschnitt im Bereich einer Heckklappe.
- Fig. 6: einen ensprechenden Vertikalschnitt im Türbereich bei einer anderen Ausführungsform.

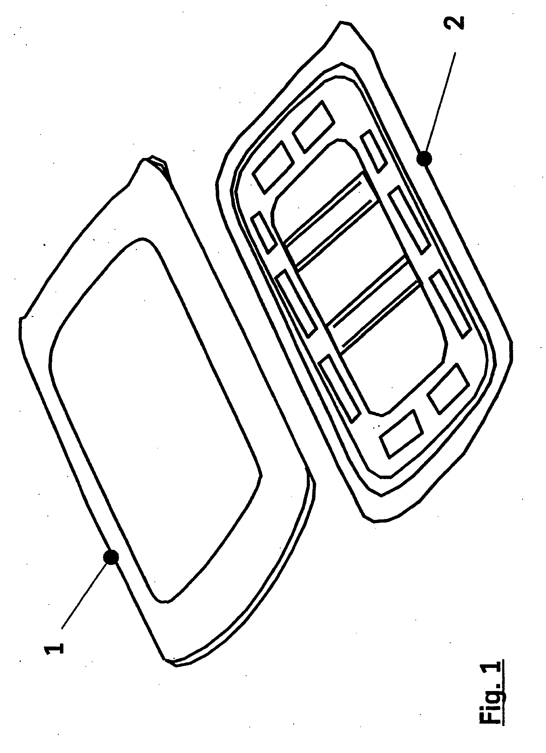

Zu dem dargestellten Dachmodul gehören eine Dachhaut 1 und ein Verstärkungsrahmen 2 (Fig. 1).

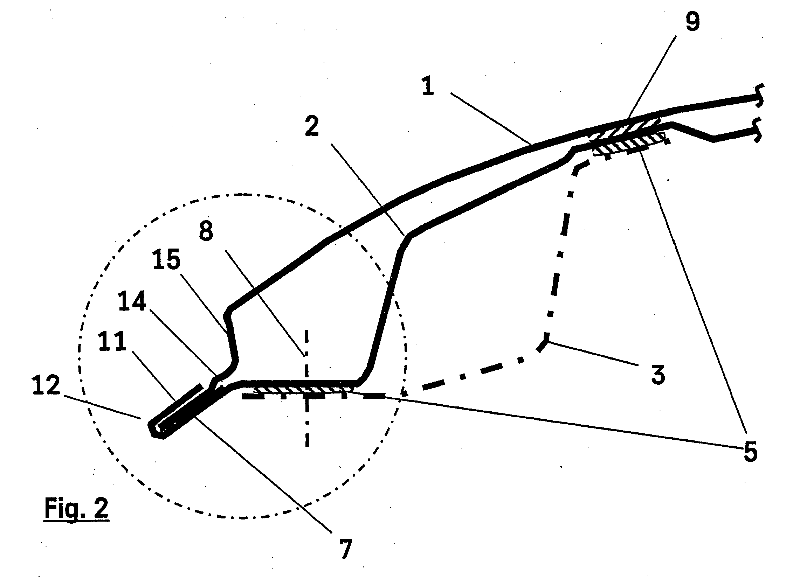

In den Figuren 2 bis 6 bezeichnen gleiche Bezugszeichen jeweils gleiche Teile. Der Verstärkungsrahmen 2 oder die Dachhaut 1 weisen einen umlaufenden Randstreifen 10 bzw.13 und einen daran anschließenden Falzflansch 11 auf. Der Falzflansch 11 ist über den Randstreifen 10 bzw. 13 umgefalzt und bildet mit diesem zusammen ein U-Profil 12. In das U-Profil 12 greift ein Randstreifen 10 bzw. 13 der Dachhaut 1 bzw.des Verstärkungsrahmens 2 ein und ist mit dem Randstreifen 10 bzw. 13 über eine Strukturverklebung 7 verklebt. Die außenliegende Fuge zwischen dem Falzflansch 11 und dem Randstreifen 10 bzw. 13 der Dachhaut 1 oder des Verstärkungsrahmens 2 ist zum Schutz gegen Korrosion mit einer Versiegelung 6 abgedichtet. Eine Formstufe 4 der Dachhaut 1 schließt an den Randstreifen 13 an, sodass eine an die Formstufe 4 anschließende Auflage 14 im Wesentlichen mit dem umgefalzten Falzflansch 11 fluchtet.

Das Dachmodul wird in üblicher Weise mit Kleberaupen 5 und Schraubverbindungen 8 an einer Karosserie 3 befestigt.

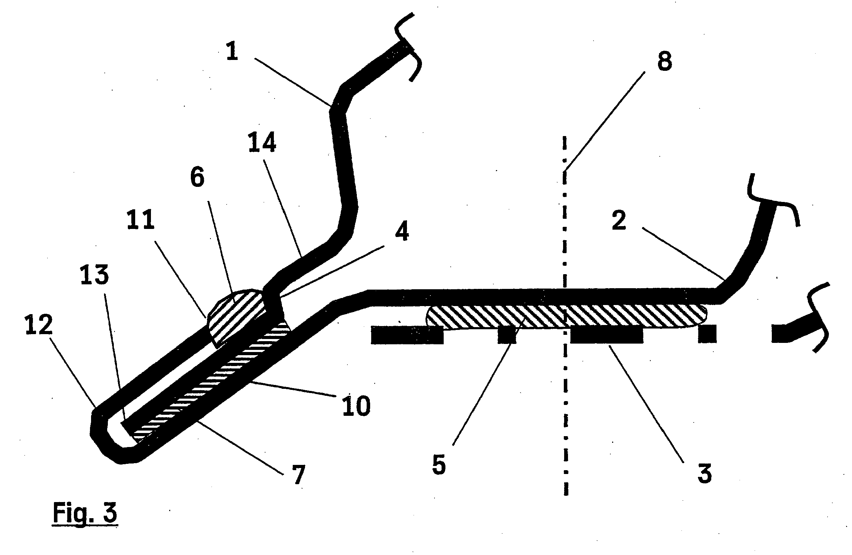

In Fig. 2 und 3 ist das an der Karosserie 3 befestigte Dachmodul im Bereich einer Frontscheibe dargestellt. Die Dachhaut 1 und der Verstärkungsrahmen 2 sind mit Abstand vom Randbereich über eine Kleberaupe 9 aneinander abgestützt. Die Dachhaut 1 weist im Anschluss an die Auflage 14 eine Stufe 15 auf, deren Höhe etwa der Dicke einer nicht dargestellten Frontscheibe entspricht, sodass die Dachhaut 1 mit einer auf der Auflage 14 randseitig befestigten Frontscheibe außen im Wesentlichen fluchtet.

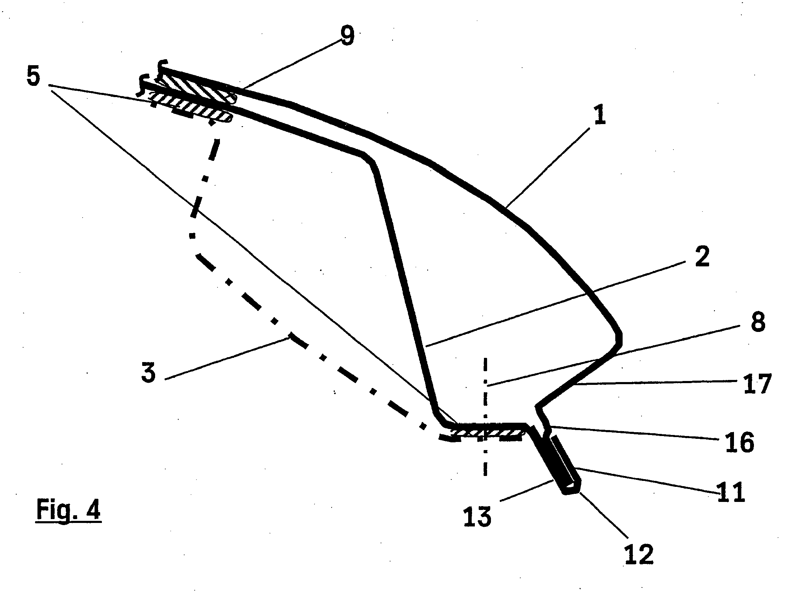

In Fig. 4 ist ein Vertikalschnitt durch das mit der Karosserie 3 verbundene Dachmodul im Türbereich dargestellt. Auch hier geht der Randstreifen 13 der Dachhaut 1 über eine Formstufe in eine Auflage 16 über, an die eine Stufe 17 anschließt. Die Auflage 16 ist für eine nicht dargestellte Seitentürscheibe bzw. die zugehörige Scheibendichtung vorgesehen. Die Stufe 17 weist eine Höhe auf, die etwa der Dicke der Seitentürscheibe und/oder der Scheibendichtung entspricht.

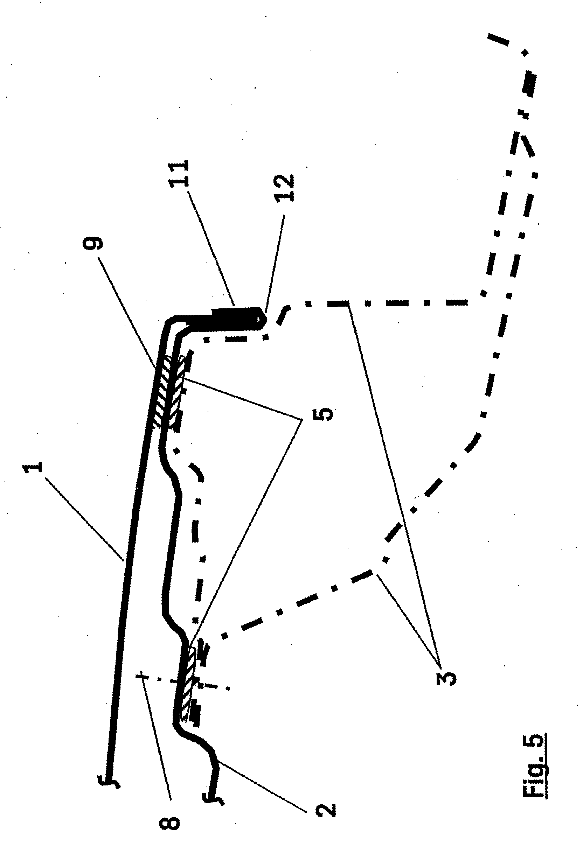

Fig. 5 zeigt die Ausbildung der Dachhaut 1 im Bereich einer nicht dargestellten Heckklappe, wobei auf die Stufe in der Dachhaut verzichtet worden ist.

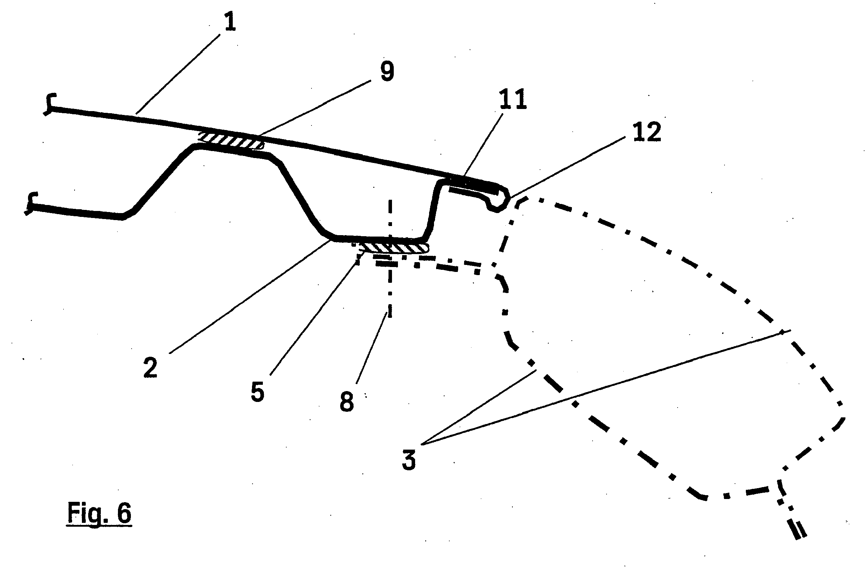

In Fig. 6 ist ein Vertikalschnitt durch das mit der Karosserie 3 verbundene Dachmodul im Türbereich dargestellt. Hier wird der Rand der Dachhaut 1 über den Randstreifen des Verstärkungsrahmen 2 gefalzt.

Durch die beschriebenen Maßnahmen wird die Verbindung der Dachhaut 1 mit dem Verstärkungsrahmen 2 in allen Bereichen unsichtbar gemacht bzw. abgedichtet.

Das Dachmodul kann im Zuge der Endmontage auf die Karosserie 3 aufgesetzt und daran befestigt werden, nachdem die Inneneinrichtung durch die vorhandene große Dachöffnung in eine entsprechend modifizierte Karosserie eingebracht und dort installiert worden ist.

### Bezugszeichenliste:

- 1: Dachhaut
- 2: Verstärkungsrahmen
- 3: Karosserie
- 4: Formstufe an 1
- 5: Kleberaupen zwischen 2 und 3
- 6: Versiegelung zwischen 11 und 1
- 7: Strukturverklebung zwischen 10 und 13
- 8: Schraubverbindungen
- 9: Kleberaupe zwischen 1 und 2
- 10: Randstreifen von 2
- 11: Falzflansch
- 12: U-Profil
- 13: Randstreifen von 1
- 14: Auflage
- 15: Stufe
- 16: Auflage
- 17: Stufe

## Patentansprüche

1. Dachmodul für eine Kfz-Karosserie mit einem Verstärkungsrahmen (2) und einer daran befestigten Dachhaut (1), wobei der Verstärkungsrahmen (2) mit Schraub- und Klebeverbindungen (8, 5) an der Kfz-Karosserie (3) befestigbar ist, **dadurch gekennzeichnet, dass** der Verstärkungsrahmen (2) oder die Dachhaut (1) randseitig einen zu einem U-Profil (12) geformten Falzflansch (11) aufweist, dass ein Randstreifen (10,13) der Dachhaut (1) oder des Verstärkungsrahmens (2) in das U-Profil (12) eingreift und dort mit dem Verstärkungsrahmen (2) oder der Dachhaut (1) verklebt ist und dass das Dachmodul in einer vertikalen Projektion größer ist als eine Dachöffnung in der Kfz-Karosserie (3).

2. Dachmodul nach Anspruch 1, **dadurch gekennzeichnet, dass** eine außenliegende Fuge zwischen dem Falzflansch (11) und der Dachhaut (1) versiegelt ist.

3. Dachmodul nach Anspruch 1 oder 2, **dadurch gekennzeichnet, dass** das U-Profil (12) im Bereich einer Frontscheibe außenseitig eine Auflage (14) für die Frontscheibe aufweist.

4. Dachmodul nach Anspruch 3, **dadurch gekennzeichnet, dass** die Dachhaut (1) im Bereich der Frontscheibe eine Stufe (15) aufweist, deren Höhe etwa der Dicke der Frontscheibe entspricht.

5. Dachmodul nach einem der Ansprüche 1 bis 4, **dadurch gekennzeichnet, dass** das U-Profil (12) im Türbereich außenseitig eine Auflage (16) für das Seitenfenster und/oder die Scheibendichtung aufweist.

6. Dachmodul nach Anspruch 5, **dadurch gekennzeichnet, dass** die Dachhaut (1) im Türbereich eine Stufe (17) aufweist, deren Höhe etwa der Dicke des Seitenfensters und/oder der Scheibendichtung entspricht.

7. Dachmodul nach einem der Ansprüche 1 bis 6, **dadurch gekennzeichnet, dass** die Dachhaut (1) und /oder der Verstärkungsrahmen (2) aus vorbehandelten und/oder vorlackierten Blechen bestehen.

## Claims

1. A roof module for a motor vehicle body comprising a reinforcing frame (2) and a roof panel (1) fastened thereto. Said reinforcing frame (2) can be fastened to the motor vehicle body (3) by means of screw connections and adhesive bonds (8, 5), **characterized in that** said reinforcing frame 83) or said roof panel (1) has a folded flange (11) at the edge shaped to a U section (12), and that an edge strip (10, 13) of the roof panel (1) or reinforcing frame (2) engages into said U section (12) and is bonded there to the reinforcing frame (2) or roof panel (1), and that the roof panel in a vertical projection is greater than a roof opening in the motor vehicle body (3).

2. A roof module pursuant to Claim 1, **characterized in that** an external joint between the folded flange (11) and the roof panel (1) is sealed.

3. A roof module pursuant to any of the preceding Claims 1 or 2, **characterized in that** said U section (12) in the area of a front window at the outside has a support (14) for the front window.

4. A roof module pursuant to Claim 3, **characterized in that** said roof panel (1) in the area of the front window has a step (15), whose height roughly corresponds to the thickness of the front window.

5. A roof module pursuant to any of the preceding Claims 1 to 4, **characterized in that** said U section (12) in the door area at the outside has a support (16) for the side window and/or side window pane seal.

6. A roof module pursuant to Claim 5, **characterized in that** said roof panel (1) in the door area has a step (17), whose height roughly corresponds to the thickness of the side window and/or side window pane seal.

7. A roof module pursuant to any of the preceding claims 1 to 6, **characterized in that** said roof panel (1) and/or reinforcing frame (2) are comprised of pretreated and/or prelacquered metal sheets.

## Revendications

1. Module de toit pour une carrosserie automobile avec un cadre de renforcement (2) et une couverture de toit qui y est fixée (1), le cadre de renforcement (2) pouvant être assemblé à la carrosserie automobile (3) par assemblages vissés ou collés (8, 5), **caractérisé en ce que** le cadre de renforcement (2) ou la couverture de toit (1) présente une bride pliée (11) côté bord, laquelle est formée de matière telle qu'elle a un profil en U (12), qu'une bande marginale (10, 13) de la couverture de toit (1) ou du cadre de renforcement (2) prend dans le profil en U (12) et y est collée au cadre de renforcement (2) ou à la couverture de toit (1) et qu'en projection verticale le module de toit est plus grand qu'une ouverture de toit (3) ménagée dans la carrosserie automobile (3).

2. Module de toit selon la revendication 1, **caractérisé en ce qu'**un joint extérieur est scellé entre la bride pliée (11) et la couverture de toit (1).

3. Module de toit selon la revendication 1 ou 2, **caractérisé en ce que** le profil en U (12) présente, à l'extérieur dans la zone d'un pare-brise, un appui (14) pour le pare-brise.

4. Module de toit selon la revendication 3 **caractérisé en ce que** la couverture de toit (1) présente dans la zone du pare-brise un gradin (15) dont la hauteur correspond approximativement à l'épaisseur du pare-brise.

5. Module de toit selon les revendications 1 à 4, **caractérisé en ce que** le profil en U (12) présente, à l'extérieur au niveau de la porte, un appui (16) pour la fenêtre latérale et/ou de l'étanchement de la vitre.

6. Module de toit selon la revendication 5 **caractérisé en ce que** la couverture de toit (1) présente un gradin (17) au niveau de la porte dont la hauteur correspond approximativement à l'épaisseur de la fenêtre latérale et/ou l'étanchement de la vitre.

7. Module de toit selon les revendications 1 à 6, **caractérisé en ce que** la couverture de toit (1) et/ou le cadre de renforcement (2) sont fabriqués à partir de tôles prétraitées et/ou pré-peintes.
